# EUROPÄISCHE PATENTANMELDUNG

(11) **EP 2 216 203 A1**
(43) Veröffentlichungstag der Anmeldung: **11.08.2010**
(21) Anmeldenummer: 10000291.4
(22) Anmeldetag: 14.01.2010
(51) Int. Cl.: B60R 7/02

(54) **Ladeboden eines Lastfahrzeugs**

(30) Priorität: 06.02.2009 DE 202009000091 U
(71) Anmelder: Elting Geräte- und Apparatebau GmbH & Co. KG, 46395 Bocholt-Liedern (DE)
(72) Erfinder: Elting, Franz, 46395 Bocholt (DE)
(74) Vertreter: Habbel, Ludwig

(57) **Zusammenfassung**

Die Erfindung betrifft den Ladeboden eines Lastfahrzeugs in Form einer Sandwich-Konstruktion, welche eine Kernschicht umfasst, die zwischen zwei Deckschichten angeordnet ist, wobei
a) der Ladeboden eine Vielzahl von nach oben offenen, sich nach unten verjüngenden Ausnehmungen aufweist, und
b) die Ausnehmungen in Form von Aufnahmehülsen ausgestaltet sind, und c) ein Sicherungselement vorgesehen ist, welches einen Konus aufweist, mit dem es von oben in eine Ausnehmung des Ladebodens eingesteckt ist.

## Beschreibung

Die Erfindung betrifft einen Ladeboden nach dem Oberbegriff des Anspruchs 1.

Aus der Praxis sind Ladeböden von Kraftfahrzeugen aus Sandwich-Konstruktionen bekannt. Sie weisen zwei jeweils geschlossene Deckschichten aus Metall auf, wobei die obere Deckschicht durch ihre ebene Oberfläche das Aufschieben von Paletten oder anderer Ladung ermöglicht, andererseits jedoch auch ein ungewolltes Verrutschen der Ladung während des Transportes oder bei Ladevorgängen zulässt.

Der Erfindung liegt die Aufgabe zugrunde, einen gattungsgemäßen Ladeboden dahingehend zu verbessern, dass er es ermöglicht, auf ihm verortete Ladung zuverlässig mit Hilfe von möglichst einfach handhabbaren Sicherungselementen zu sichern, wobei möglichst kleine Zwischenräume zwischen dem Sicherungselement und der Ladung verbleiben.

Diese Aufgabe wird durch einen Ladeboden mit den Merkmalen des Hauptanspruches gelöst.

Mit anderen Worten ausgedrückt wird ein Ladeboden vorgeschlagen, bei welchem Aufnahmehülsen in einer Sandwich-Konstruktion angeordnet sind und wenigstens ein Sicherungselement von oben in eine Aufnahmehülse eingebracht ist. Eine Mehrzahl von derartigen Sicherungselementen kann verwendet werden, um die Ladung optimal nach mehreren Seiten zu sichern.

Das in die Sandwich-Konstruktion eingebrachte Sicherungselement, welches vorzugsweise aus Metall vorgesehen sein kann, weist zwei Abschnitte auf: ein erster, oberer, auch als Anschlag zu bezeichnender Abschnitt erstreckt sich in den Laderaum und dient als Anschlag für die Ladung, so dass deren Freiraum für eventuelle Bewegungen eingeschränkt ist. Ein zweiter, unterer, auch als Anker zu bezeichnender Abschnitt passt mit seiner Außenform funktionell zur Innenform der Aufnahmehülse und hält das Sicherungselement an seinem vorgesehenen Platz im Ladeboden. Ohne Spannhebel, Werkzeuge oder ähnliche zusätzliche Elemente zu erfordern, kann das Sicherungselement durch einfaches Einstecken montiert werden und durch Herausziehen ebenso einfach wieder demontiert werden.

Ein Bügel oder ähnlicher Griff kann die Handhabung des Sicherungselementes erleichtern. Zudem kann das Sicherungselement deutlich kleiner bemessen sein als z. B. Sicherungsbalken, die sich über die gesamte Fahrzeugbreite erstrecken, so dass seine Handhabung besonders einfach ist und das Verstauen nicht benötigter Sicherungselemente wenig Platz beansprucht.

Das Sicherungselement kann länglich, pfostenartig ausgestaltet sein, so dass die Ladung über eine gewisse Höhe gesichert ist und zudem das Sicherungselement zur Montage bzw. Demontage bequem erfasst werden kann. Es kann jedoch auch kompakter, klotzartig ausgestaltet sein, so dass es ähnlich wie ein Bremsklotz die Ladung in deren unterem Bereich sichert.

Der Einsatz von Sandwich-Bauteilen in Lastfahrzeugen kann deren Gewicht reduzieren und somit eine Erhöhung der Ladungslast bei gleichbleibendem Fahrzeug-Gesamtgewicht ermöglichen. Diesen Umstand begünstigend kann der vorschlagsgemäße Ladeboden als tragendes Teil in einem Fahrzeugrahmen vorgesehen sein. Vorteile des geringeren Fahrzeuggewichtes können sich auch hinsichtlich eines geringeren Treibstoffverbrauches bei Leerfahrten des Fahrzeuges zeigen.

Der vorschlagsgemäße Ladeboden kann sich, je nach Anforderung eines Fahrzeugherstellers oder Endkunden, über Teilbereiche oder über eine gesamte Ladefläche eines Lastfahrzeugs erstrecken. Es ist möglich, den vorschlagsgemäßen Ladeboden beispielsweise durch eine unlösbare Verbindung dauerhaft oder durch eine lösbare Verbindung, wie Verschraubung, für zeitlich begrenzte Anforderungen als nachträgliche Ausrüstung für praxisübliche Ladeböden vorzusehen. Dies kann die Flexibilität eines Lastfahrzeugs erhöhen und damit einen wirtschaftlicheren Einsatz ermöglichen.

Es kann vorgesehen sein, einige wenige Aufnahmehülsen in einem fest vorgegebenen Muster anzuordnen, welches optimal an ein bestimmtes Ladegut angepasst ist. Jedoch würde mit einem derartigen Ladeboden die Ladungssicherung für Transportgut mit anderen Abmessungen andere, zusätzliche Sicherungselemente erfordern. Um dies wirkungsvoll zu vermeiden, können vorteilhaft die Aufnahmehülsen in einem Raster über den Ladeboden verteilt angeordnet sein. Diese Rasteranordnung ermöglicht eine flexible Anpassung an die unterschiedlichen Abmessungen des Ladeguts oder an sich verändernde Ansprüche an die Ladungssicherung beim Be- und Entladen.

Wird, wie in der Praxis üblich, Ladung auf einem Ladeboden, beispielsweise dem eines LKW, mit Sicherungsmitteln gesichert, so kann es wegen verbleibender Zwischenräume zwischen Ladung und den verwendeten Sicherungselementen zu einer unerwünschten Positionsänderung der Ladung während des Transportes kommen. Das Rastermaß für die Anordnung der Aufnahmehülsen kann daher vorteilhaft circa 15 cm betragen. Diese Aufteilung ermöglicht es einerseits, die Sicherungselemente dicht an das zu sichernde Stückgut heran zu bringen und erlaubt somit eine zuverlässige Ladungssicherung, andererseits wird eine wirtschaftliche Fertigung und eine gute Stabilität des Ladebodens ermöglicht. Der Durchmesser der Aufnahmehülsen und die Abmessungen der Anschläge an den Sicherungselementen beeinflussen den Freiraum zwischen der Ladung und dem Sicherungselement.

Um eine besondere Stabilität der gesamten Konstruktion zu gewährleisten, können die in die Ausnehmung der Sandwich-Konstruktion eingebrachten Aufnahmehülsen an einer Deckschicht oder an beiden Deckschichten der Sandwich-Konstruktion befestigt sein. Ein solcher Verbund unterstützt wirkungsvoll eine schadfreie Aufnahme von auftretenden Längs- und Querkräften.

In der Praxis werden oft Sicherungselemente verwendet, zu deren Montage bzw. Demontage mehrere Teile zu handhaben sind, was umständlich ist. Im Gegensatz dazu sind zur einfacheren Positionierung die Aufnahmehülsen und die Sicherungselemente an ihrer jeweiligen Koppelstelle konusförmig ausgestaltet. Um ein unerwünschtes Losrütteln der Sicherungselemente während des Transportes zu vermeiden, kann eine hier verwendete Konusform selbsthemmend wirken.

Durch die Fahrten oder durch das Beladen der Fahrzeuge können Schmutz und Wasser in den Laderaum verbracht werden. Um eine zuverlässige Funktion der Koppelstelle zwischen Aufnahmehülse und Sicherungselement zu gewährleisten, kann es vorgesehen sein, dass die Aufnahmehülsen nach unten offen ausgestaltet sind. Dies kann beispielsweise durch eine Ablauföffnung im Boden der Aufnahmehülse oder eine bodenlose Ausführungsform der Aufnahmehülse realisiert sein. So können, beispielsweise bei einer Reinigung des Laderaumes oder während des Fahrbetriebs, Schmutz und Wasser schwerkraftunterstützt abgeführt werden.

Die Länge der Aufnahmehülse kann größer bemessen sein, als die Länge des Konus am Sicherungselement. Der vom Konus des Sicherungselementes nicht genutzte Raum am unteren Ende der Aufnahmehülse schafft somit eine Ablaufzone für anfallenden Schmutz, was gewährleistet, dass der darüber angeordnete Konussitz frei und somit nutzbar bleibt.

Um eine möglichst hohe Selbsthemmung im Konussitz bei möglichst geringer Stärke der Sandwich-Konstruktion zu erhalten, kann die Länge der Aufnahmehülsen größer bemessen sein als die Stärke der Sandwich-Konstruktion. Dabei können die Aufnahmehülsen so angeordnet sein, dass sie eine Deckschicht der Sandwich-Konstruktion, vorteilhaft die untere, durchdringen. Die Stärke der Sandwich-Konstruktion kann so zugunsten einer technisch einfacheren Fertigung und zur Einsparung von Material für die Sandwich-Kernschicht gering gehalten werden.

Vorteilhaft kann die Aufnahmehülse aus einer Deckschicht selbst gebildet werden. Dies ist beispielsweise mittels eines Umformverfahrens möglich. Auf diese Weise kann das "Eigenmaterial" der Deckschicht zur Ausbildung der Aufnahmehülse genutzt und die Formstabilität der Sandwich-Konstruktion erhöht werden. Das Eindringen von Fremdstoffen z. B. in die Kernschicht kann so zuverlässig vermieden werden, da die Aufnahmehülsen spaltfrei an die obere Deckschicht anschließen. Der Produktionsschritt für das Befestigen der Aufnahmehülse an einer Deckschicht, sowie das Material für eine zusätzliche Aufnahmehülse kann somit eingespart und die gesamte Konstruktion wirtschaftlicher bereitgestellt werden. Es kann jedoch ebenso vorgesehen sein, eine durch einen Umformvorgang erzeugte Wandung der Ausnehmung als Sitz für eine zusätzliche Aufnahmehülse zu verwenden. Eine solche zusätzliche Aufnahmehülse kann beispielsweise durch Kleben oder andere geeignete Verfahren in die Ausnehmung eingebracht und im Fall einer Beschädigung einfach austauschbar sein.

Das Sicherungselement kann mehrteilig ausgeführt sein, beispielsweise in der Art, dass der Anker ein Teil darstellt, welches an den Anschlag des Sicherungselementes montiert wird. Somit kann ein baukastenartiger Zusammenbau unterschiedlicher, an die jeweilige Aufgabe optimal angepasster Sicherungselemente ermöglicht werden.

Dies ermöglicht einen flexiblen Einsatz einzelner Teile des Sicherungselementes auch bei unterschiedlichen Konus-Bauformen, wenn z. B. unterschiedliche Ladeböden vorgesehen sind, deren Aufnahmehülsen unterschiedliche Querschnitte aufweisen, z. B. jeweils einen runden oder mehreckigen Querschnitt.

Es kann vorgesehen sein, dass das Sicherungselement zwei oder mehr Teile übereinander aufweist, durch welche die Höhe des Sicherungselementes der Ladungshöhe angepasst werden kann. Bei Nichtnutzung kann das Sicherungselement in leicht handhabbare Teile zerlegt sein und platzsparend im Lastfahrzeug mitgeführt werden.

Ausführungsbeispiele des vorschlagsgemäßen Ladebodens werden anhand rein schematischer Zeichnungen nachfolgend näher erläutert. Dabei zeigen
- Fig. 1 u. 2: einen Vertikalschnitt durch die Sandwich-Konstruktion eines Ladebodens mit einem darüber angedeuteten Sicherungselement.
- Fig. 3: einen Vertikalschnitt durch die Sandwich-Konstruktion eines Ladebodens mit einem darüber angeordneten Sicherungselement.

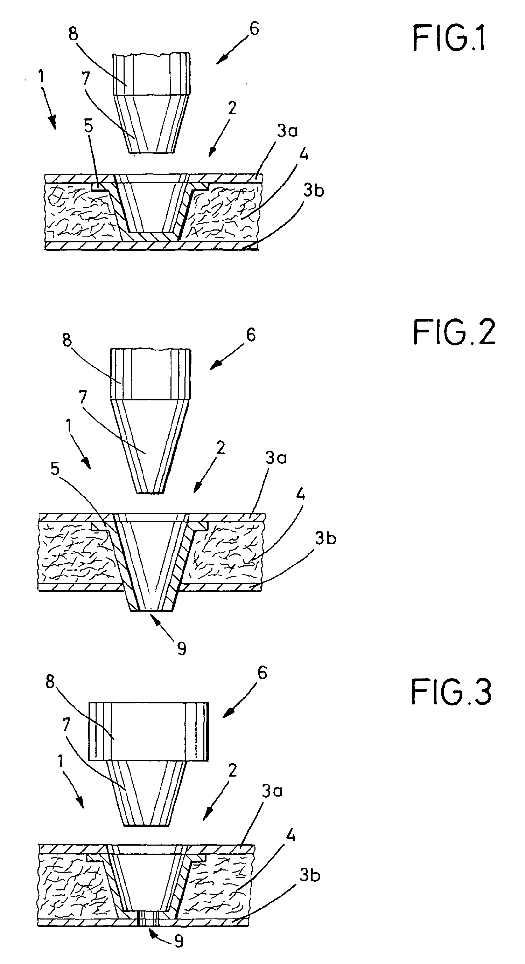

In den Zeichnungen ist mit 1 jeweils insgesamt ein Ladeboden bezeichnet, der eine Sandwich-Konstruktion 2 mit einer oberen Deckschicht 3a, einer unteren Deckschicht 3b und einer dazwischen angeordneten Kernschicht 4 aufweist, durch welche sich eine Aufnahmehülse 5 erstreckt. Oberhalb ist ein Sicherungselement 6 mit seinem in die Aufnahmehülse 5 einzubringenden Konus 7 und einem Anschlag 8 angedeutet. In Fig. 2 und Fig. 3 ist ein Ausführungsbeispiel eines Ladebodens 1 mit einer Aufnahmehülse 5 mit einer Ablauföffnung 9 dargestellt.

Fig. 1 zeigt ein Ausführungsbeispiel, bei dem eine Aufnahmehülse 5 innerhalb der Kernschicht 4 einer Sandwich-Konstruktion 2 angeordnet und an ihrem oberen, offenen Ende mit der Deckschicht 3a und an ihrem unteren, geschlossenen Ende mit der Deckschicht 3b verbunden ist. Dieser großflächige Verbund sorgt für eine besondere Stabilität der Sandwich-Konstruktion 2, wie sie für eine zuverlässige Ladungssicherung nötig ist. Das oberhalb angedeutete Sicherungselement 6 ist pfostenartig ausgestaltet. Mit seinem Konus 7 wird es in die Sandwich-Konstruktion eingebracht und erstreckt sich mit seinem Anschlag 8 in den Laderaum des Lastfahrzeugs.

In Fig. 2 ist ein Ausführungsbeispiel dargestellt, bei dem eine Aufnahmehülse 5 die untere Deckschicht 3b durchdringt und axial länger bemessen ist als die Stärke der Sandwich-Konstruktion 2. In Kombination mit einer angepassten Länge des Konus 7 ermöglicht diese Ausgestaltung eine hohe Selbsthemmung im Konussitz bei vergleichsweise materialsparender Stärke der Sandwich-Konstruktion 2. Durch die hier dargestellte Ausführung der Aufnahmehülse 5 ohne Boden ergibt sich hier eine Ablauföffnung 9.

Fig. 3 zeigt ein Ausführungsbeispiel, bei dem das Sicherungselement 6 gebildet wird aus dem Konus 7 und dem darüber angeordneten Anschlag 8, welcher hier klotzartig kompakt ausgeführt ist. Diese Ausführungsform eignet sich vorteilhaft für die Sicherung von Ladung in deren unterem Bereich. Eine Ablauföffnung 9 ist hier in Form einer bohrungsartigen Durchdringung der Aufnahmehülse 5 in deren Bodenbereich und der daran angrenzenden unteren Deckschicht 3b ausgestaltet. Diese Ausgestaltungsvariante ermöglicht das schwerkraftunterstützte Abführen von Schmutz und Wasser aus dem Laderaum, aber auch eine stabilitätssteigernde flächige Verbindung zwischen dem Boden der Aufnahmehülse 5 und der unteren Deckschicht 3b.

## Patentansprüche

1. Ladeboden eines Lastfahrzeugs
in Form einer Sandwich-Konstruktion, welche eine Kernschicht umfasst, die zwischen zwei Deckschichten angeordnet ist,
**dadurch gekennzeichnet,**
**dass**
a) der Ladeboden (1) eine Vielzahl von nach oben offenen, sich nach unten verjüngenden Ausnehmungen aufweist, und
b) die Ausnehmungen in Form von Aufnahmehülsen (5) ausgestaltet sind,
und
c) ein Sicherungselement (6) vorgesehen ist, welches einen Konus (7) aufweist, mit dem es von oben in eine Ausnehmung des Ladebodens (1) eingesteckt ist.

2. Ladeboden nach Anspruch 1,
**dadurch gekennzeichnet,**
**dass** die Ausnehmungen in einem Raster über den Ladeboden (1) verteilt angeordnet sind.

3. Ladeboden nach Anspruch 1 oder 2,
**dadurch gekennzeichnet,**
**dass** die Aufnahmehülsen (5) in einem Mitten-Abstand von ca. 15 cm angeordnet sind.

4. Ladeboden nach einem der vorhergehenden Ansprüche,
**dadurch gekennzeichnet,**
**dass** die Aufnahmehülsen (5) an einer Deckschicht (3a, 3b) der Sandwich-Konstruktion (2) befestigt sind.

5. Ladeboden nach einem der vorhergehenden Ansprüche,
**dadurch gekennzeichnet,**
**dass** die Aufnahmehülsen (5) an beiden Deckschichten (3a und 3b) der Sandwich-Konstruktion (2) befestigt sind.

6. Ladeboden nach einem der vorhergehenden Ansprüche,
**dadurch gekennzeichnet,**
**dass** die Aufnahmehülsen (5) und der Konus (7) selbsthemmend ausgestaltet sind.

7. Ladeboden nach einem der vorhergehenden Ansprüche,
**dadurch gekennzeichnet,**
**dass** die Aufnahmehülsen (5) an ihrem unteren Ende offen sind.

8. Ladeboden nach einem der vorhergehenden Ansprüche,
**dadurch gekennzeichnet,**
**dass** die axiale Länge der Aufnahmehülsen (5) von der axialen Länge des Konus (7) abweicht.

9. Ladeboden nach einem der vorhergehenden Ansprüche,
**dadurch gekennzeichnet,**
**dass** die axiale Länge der Aufnahmehülsen (5) von der Stärke der Sandwich-Konstruktion (2) abweicht.

10. Ladeboden nach einem der vorhergehenden Ansprüche,
**dadurch gekennzeichnet,**
**dass** die Aufnahmehülse (5) aus einer Deckschicht der Sandwich-Konstruktion (2) selbst gebildet ist.

11. Sicherungselement (6) eines Ladebodens (1) nach einem der vorhergehenden Ansprüche.

12. Sicherungselement nach Anspruch 11,
**dadurch gekennzeichnet,**
**dass** das Sicherungselement (6) aus mehreren Bauteilen gebildet wird, mit
a) einem Konus (7) und
b) einem Anschlag (8).
